# FASCICULE DE BREVET EUROPEEN

(11) **EP 2 874 829 B1**
(45) Date de publication et mention de la délivrance du brevet: **06.07.2016**
(21) Numéro de dépôt: 13740252.5
(22) Date de dépôt: 19.07.2013
(51) Int. Cl.: B60C 11/12, B60C 11/03

(54) **BANDE DE ROULEMENT POUR PNEU D'ESSIEU MOTEUR DE POIDS LOURD ET PNEU**
REIFENPROFIL FÜR EINE ANTRIEBSACHSE EINES SCHWERLASTFAHRZEUGS UND REIFEN
TREAD FOR TYRE OF A DRIVE AXLE OF A HEAVY GOODS VEHICLE AND TYRE

(30) Priorité: 20.07.2012 FR 1257067
(43) Date de publication de la demande: 27.05.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FELDER, Thomas, F-63040 Clermont-Ferrand Cedex 9 (FR); MARLIER, Fabien, F-63040 Clermont-Ferrand Cedex 9 (FR)
(74) Mandataire: Diernaz, Christian
(86) Numéro de dépôt international: PCT/EP2013/065326
(87) Numéro de publication internationale: WO 2014/013065

(56) Documents cités:
- JP-A- 2002 029 218
- JP-A- 2006 341 770
- US-A- 4 266 592

## Description

### DOMAINE DE L'INVENTION

La présente invention concerne les bandes de roulement de pneu et notamment les bandes de roulement pour pneus équipant les véhicules poids lourd. Encore plus spécifiquement les bandes de roulement de l'invention sont prévues pour équiper des pneus destinés à des essieux moteur de véhicules poids lourd.

### ÉTAT DE LA TECHNIQUE

Un véhicule poids lourd comprend des essieux équipés de pneus, ces essieux n'étant pas tous soumis aux mêmes efforts : dans le cas d'un essieu moteur, les pneus sont soumis, outre la charge portée, à des forces motrices et des forces freineuses, ces forces s'exerçant entre la chaussée et les bandes de roulement dont sont pourvues lesdits pneus. Ces bandes de roulement comprennent de manière connue une pluralité de rainures d'orientation longitudinale et transversale, ces rainures délimitant des éléments de relief sous la forme de nervures et/ou de blocs.

Ces rainures ne se ferment pas complètement lors du passage dans la région de contact du pneu avec la route et permettent ainsi l'évacuation de l'eau hors de cette région de contact, notamment par temps de pluie.

Pour assurer une bonne motricité des pneus sur essieu moteur, il est connu de former préférentiellement des bandes de roulement comprenant des nervures circonférentielles au moins sur la région centrale, c'est-à-dire hors des parties axialement les plus à l'extérieur des bandes. Les parties axialement les plus à l'extérieur peuvent être formées de blocs, ces blocs pouvant être reliés localement par des ponts de matière.

Il est également connu d'adjoindre aux nervures une pluralité d'incisions dont la largeur est appropriée pour réaliser une fermeture au moins partielle lors du passage dans le contact, cette fermeture assurant une excellente rigidité en cisaillement à la nervure. Par fermeture au moins partielle, on entend que les parois en vis-à-vis délimitant une incision sont au moins en partie en contact l'une contre l'autre au moins lors du passage dans le contact. Les incisions ainsi réalisées ont une profondeur qui est égale ou proche de la profondeur des rainures de manière à être actives durant toute la durée d'utilisation du pneu (c'est-à-dire avant de devoir changer le pneu sur usure ou de devoir renouveler sa bande de roulement par un procédé de rechapage).

Pour rappel, les incisions présentent l'avantage de générer des arêtes de matière additionnelles utiles pour couper un film de liquide présent sur la chaussée, ce film pouvant s'intercaler entre la bande de roulement et la chaussée et pouvant être à l'origine d'une diminution des performances d'adhérence du pneu en roulage.

Bien entendu, le nombre d'incisions par nervure doit être déterminé avec attention pour ne pas affaiblir ladite nervure. Il est connu de déterminer, pour une nervure de dimension (hauteur, largeur) données, le nombre d'incisions qui peuvent être réalisées pour bénéficier d'un fonctionnement sensiblement homogène.

À l'usage, il a été constaté que dans certaines conditions de faible hauteur du film de liquide présent sur une chaussée lisse, il pouvait se produire une accumulation de liquide entre la chaussée et la matière formant la bande de roulement.

Une bande de roulement connue est divulguée dans le document JP-A-2002029218.

### Définitions :

Le taux de creux d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière en vis-à-vis et distantes l'une de l'autre d'une distance moyenne non nulle. Ce qui différencie une incision d'une rainure c'est précisément cette distance ; dans le cas d'une incision, cette distance est appropriée pour permettre la mise en contact des parois opposées lors du passage dans le contact avec la chaussée. Cette distance pour une incision est ici au plus égale à 2 millimètres (2 mm). Dans le cas d'une rainure, les parois de cette rainure ne peuvent venir en contact l'une contre l'autre, même partiellement, dans les conditions usuelles de roulage.

La direction principale d'une incision correspond à la direction moyenne passant par les points les plus éloignés de l'incision sur la surface de roulement de la bande à l'état neuf non usé.

La direction secondaire est définie comme la direction perpendiculaire à la direction principale d'une incision et s'étendant dans l'épaisseur de la bande.

Les conditions d'utilisation du pneu telles que définies par la norme E.T.R.T.O. précisent la pression de gonflage de référence correspondant à la capacité de charge du pneu indiquée par son indice de charge et son code vitesse. Ces conditions d'utilisation peuvent être dites conditions nominales ou conditions d'usage.

### BREF EXPOSÉ DE L'INVENTION

Un besoin existait d'améliorer de telles bandes de roulement en adhérence sur sol mouillé sans dégrader leurs performances dans les autres conditions et notamment de ne pas modifier leur performance en usure.

À cet effet, l'invention a pour objet une bande de roulement pour pneu destiné à équiper l'essieu moteur d'un véhicule poids lourd, cette bande de roulement comprenant une pluralité de rainures circonférentielles ayant chacune une profondeur et une largeur, délimitant au moins trois nervures ayant chacune une hauteur et une largeur mesurée dans la direction axiale, la bande de roulement étant délimitée axialement par deux rangées de bord, chaque nervure étant pourvue d'une pluralité d'incisions aptes à se fermer au moins en partie lors du passage dans le contact avec une chaussée, ces incisions s'ouvrant sur chaque face latérale de la nervure pour former deux arêtes et ayant une profondeur au moins égale à 50% de la hauteur de la nervure, ces incisions délimitant deux à deux un volume élémentaire de nervure ainsi qu'une surface élémentaire de contact.

Cette bande de roulement est caractérisée en ce que sur chaque volume élémentaire délimité par deux incisions d'une même nervure, il est formé un volume de creux s'ouvrant sur la face de contact à l'état neuf, ce volume de creux ayant une aire totale sur la surface de roulement au moins égale à 0.4% et au plus égale à 1.5% de l'aire de la surface élémentaire de ce volume de creux, ce volume de creux ayant une profondeur au moins égale à la moitié de la profondeur des rainures et en ce que ce volume de creux additionnel est déterminé pour rester ouvert lors du passage dans le contact afin de permettre le captage de liquide éventuellement présent sur la chaussée. Ce liquide est éjecté en dehors de la région de contact par l'effet de la force centrifuge. En outre, le volume de creux est localisé en partie centrale du volume élémentaire, cette partie centrale du volume élémentaire correspondant à un cylindre radial s'étendant dans ce volume élémentaire et radialement de façon tangente aux incisions délimitant ce volume élémentaire.

Préférentiellement la distance minimale entre deux incisions délimitant un volume élémentaire est inférieure à la largeur axiale dudit volume élémentaire. De cette façon, le cylindre radial est entièrement contenu dans le volume élémentaire.

Préférentiellement, la profondeur des creux est supérieure à 0.75 fois la profondeur des rainures et encore plus préférentiellement au moins égale à la profondeur correspondant à la limite d'usure de la bande de roulement.

L'avantage de l'invention est, sans affecter la rigidité de chaque volume élémentaire, de créer un volume de creux disponible pour capter au moins une partie de liquide pouvant se trouver entre la surface dudit volume et la chaussée et cela préférentiellement dans la partie centrale de chaque surface de contact des volumes élémentaires. En effet, les incisions délimitant chaque volume élémentaire se referment au passage dans le contact et il est particulièrement utile de créer du creux dans la partie centrale qui se trouve être la plus éloignée des bords de la nervure dans laquelle sont faites lesdites incisions.

Grâce aux dispositions de l'invention, cette bande de roulement présente en outre l'avantage d'une sensibilité réduite aux agressions par des corps étrangers car les volumes additionnels de creux restent très limités.

Selon une variante de l'invention, la bande de roulement selon l'invention est telle que le volume de creux entre deux incisions d'une même nervure est formé par le volume d'au moins deux cavités ou puits, chaque cavité ou puits ayant une profondeur moyenne au moins égale à 0.75 fois la profondeur des rainures (cette profondeur des rainures correspondant à la hauteur des nervures).

Préférentiellement, chaque cavité a une section de forme générale convexe et respectant une condition de rapport d'aspect 2/3 < 1/L< 3/2, où « l » est la dimension maximale de la cavité dans la direction circonférentielle et « L » la dimension maximale de la cavité dans le sens transversal, de manière à ce que chaque cavité reste ouverte lors du passage dans le contact.

Par forme générale convexe, on entend qu'autour du contour de chaque cavité si on trace sur la surface de roulement un cercle tangent de plus petite surface, l'écart de surfaces entre la surface de ce cercle et celle délimitée par le contour de la cavité sur la surface de roulement est au plus 30% de la surface dudit cercle.

Cette condition peut être remplie notamment avec des sections de forme circulaire, triangulaire ou rectangulaire.

Afin de faciliter le drainage de liquide vers l'intérieur des creux additionnels, il est judicieux de disposer les cavités de façon qu'elles soient à distance égale ou sensiblement égale de chacune des incisions délimitant un volume élémentaire et distantes les unes des autres d'une distance égale ou proche de la largeur de la nervure divisée par le nombre de cavités additionné d'une unité.

Dans une variante avantageuse de l'invention, la bande de roulement comprend une nervure centrale et de part et d'autre au moins une nervure intermédiaire, chaque nervure intermédiaire étant pourvue d'incisions faisant un angle moyen différent de zéro avec la direction axiale, les angles des incisions des nervures intermédiaires étant tels que la bande de roulement présente une orientation en V des éléments élémentaires.

Avec cette dernière variante, il est possible de combiner la disposition selon laquelle les incisions formées sur la nervure centrale ont une forme en flèche pour suivre l'inclinaison des incisions formées sur les nervures situées de part et d'autre de la nervure centrale.

Une autre variante intéressante de l'invention consiste à pourvoir chaque rangée de bord d'une pluralité de blocs espacés circonférentiellement les uns des autres par des rainures d'orientation transversale ou sensiblement transversale.

Afin de limiter encore la diminution de rigidité liée à la présence de rainures transversales sur les bords, il est préférable de relier les blocs des bords par une série de pontages de matière.

D'une manière préférentielle, les variantes de bandes de roulement selon l'invention sont telles que le pas des incisions formées sur les nervures est constant ou sensiblement constant et choisi pour être au moins égal à 18 mm et au plus égal à 52 mm. Ce choix est déterminé en fonction de la profondeur des rainures délimitant la nervure considérée ; plus la profondeur est importante et plus le pas des incisions est grand.

D'autres caractéristiques et avantages de l'invention ressortent de la description faite ci-après en référence au dessin annexé qui montre un exemple non limitatif d'une variante de réalisation de l'objet de l'invention.

### BRÈVE DESCRIPTION DES FIGURES

La figure 1 montre une vue d'une partie de la surface de roulement d'une bande de roulement selon l'invention ;
La figure 2 montre une vue en coupe selon une ligne II-II prise sur la figure 1.

### DESCRIPTIONDES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

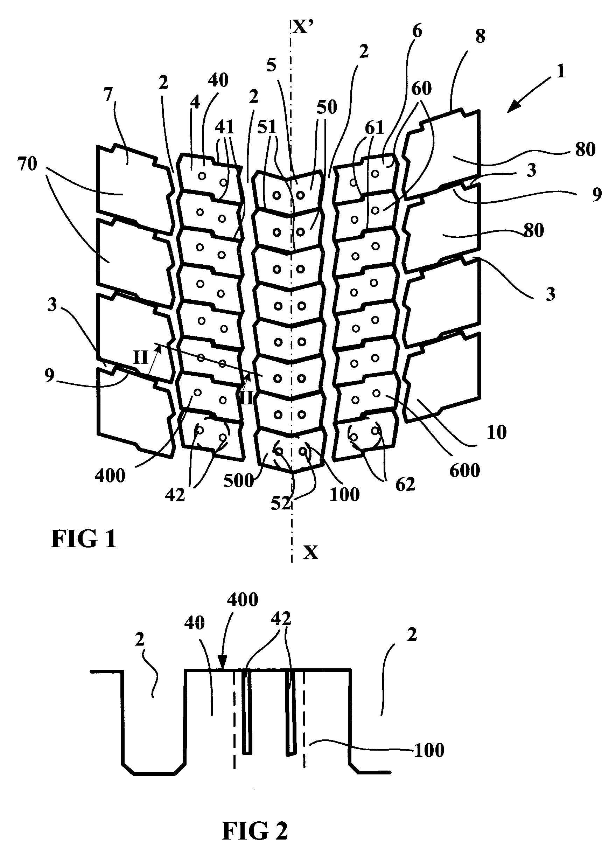

La figure 1 montre une partie d'une bande de roulement 1 pour pneu de véhicule poids lourd. Ce pneu, de dimension 315/70R 22.5, est destiné à équiper un essieu moteur d'un véhicule poids lourd de fort tonnage destiné à un roulage de type autoroute. Cette bande de roulement a une largeur égale à 282 mm.

Sur cette bande 1, on distingue quatre rainures 2 d'orientation générale circonférentielle ayant une géométrie zigzag. Ces quatre rainures 2 ont une même profondeur égale à 15 mm et une largeur moyenne égale à 10 mm. Ces rainures 2 délimitent des nervures : deux nervures intermédiaires 4, 6 ayant une largeur égale à 45 mm, et une nervure centrale 5 ayant une largeur égale à 47 mm. En outre, la bande de roulement 1 est délimitée axialement par deux rangées de bord 7, 8 formées chacune d'une pluralité de blocs 70, 80 respectivement, ces blocs étant séparés les uns des autres dans la direction circonférentielle par des rainures obliques 3 faisant un angle égal à ou proche de 71° avec la direction circonférentielle (repérée sur le dessin par la direction XX'). Les blocs 70, 80 des rangées de bord 7, 8 sont reliés entre eux par une protubérance 9 locale qui empêche la fermeture des rainures 3 dans le contact avec la chaussée pour permettre une évacuation latérale suffisante de l'eau lors d'un roulage par temps de pluie.

Sur la nervure centrale 5, on distingue une pluralité d'incisions 51 de largeur inférieure à 1 mm, cette largeur étant choisie pour permettre la fermeture quasi complète desdites incisions dans le contact avec la chaussée. Par fermeture quasi complète, il faut comprendre que les parois en vis-à-vis délimitant chaque incision sont au moins partiellement en contact l'une contre l'autre, ce qui permet de conserver à la nervure centrale 5 une grande rigidité au moins pour la partie de la nervure dans le contact avec la chaussée.

Les incisions de la nervure centrale ont, sur la surface de roulement, une géométrie en V et sont disposées selon un pas moyen égal à 29 mm.

Chaque paire d'incisions successives délimite un volume élémentaire 50 ayant une surface de contact 500 formant une partie de la surface de roulement de la bande de roulement.

Sur chaque volume élémentaire 50, on forme deux cavités 52 ayant dans le cas présenté une section circulaire de diamètre 2.5 mm et de profondeur 12.5 mm. Ces deux cavités 52 constituent un volume de creux égal 120 mm³ apte à capter dans le passage dans le contact un volume de liquide qui pourrait se trouver entre la surface de contact du volume élémentaire 50 et la chaussée. Les cavités 52 ici décrites sont dirigés radialement c'est-à-dire que leur direction principale coupe l'axe de rotation du pneu, mais bien entendu elles pourraient être disposées de façon à faire un angle non nul avec la direction radiale. Dans le cas présent, les deux cavités 52 formées sur la nervure centrale 5 sont alignées avec la direction axiale (transversale). On définit sur chaque volume élémentaire 50 une partie centrale 100 dont la trace sur la face de contact 500 est circulaire et est tangente aux incisions délimitant ce volume élémentaire. Ce cercle a un diamètre égal à 29 mm et est donc entièrement contenu dans le volume élémentaire. Cette partie centrale s'étend radialement vers l'intérieur de la bande. Les cavités 52 sont situées à l'intérieur de cette partie centrale 100 du volume élémentaire afin d'améliorer la performance de drainage de cette partie du volume élémentaire.

Sur chaque nervure intermédiaire 4 ou 6, on voit des incisions 41, 61 respectivement, prolongeant avec un même angle les branches des incisions 51 en V de la nervure centrale 5. Cette configuration conduit à une bande de roulement ayant un sens de roulage préférentiel. Avantageusement, le pneu peut comporter un moyen visuel indiquant ce sens préférentiel.

Sur ces nervures intermédiaires 4, 6, le pas des incisions 41, 61 est le même que celui employé sur la nervure centrale 5. Ces incisions (41, 61) s'ouvrent sur chaque face latérale des nervures pour former deux arêtes et délimitent deux à deux un volume élémentaire (40, 60) de nervure ainsi qu'une surface élémentaire de contact (400, 600). À l'instar de ce qui est formé sur la nervure centrale, les cavités 42, 62 sont situées à l'intérieur de partie centrale des volumes élémentaires afin d'améliorer la performance de drainage de cette partie du volume élémentaire.

Les profondeurs des incisions des nervures intermédiaires sont égales à 12.5mm; les largeurs des incisions de ces nervures intermédiaires sont égales à 0.4 mm. Ces incisions délimitent des volumes élémentaires, 41 et 60 respectivement, dont les surfaces de contact avec la chaussée (400, 600) sont trouées de deux cavités 42, 62 respectivement. Ces cavités 42, 62 ont des dimensions semblables à celles des cavités 52 de la nervure centrale 5 à la différence que les cavités d'un même volume élémentaire sur une nervure intermédiaire sont orientés suivant une direction sensiblement parallèle à l'inclinaison moyenne des incisions délimitant ce volume élémentaire.

Sur les nervures intermédiaires 4, 6, la distance moyenne entre deux incisions est égale à 29 mm ; les cavités sont disposées à mi-distance des incisions, soit à 14 mm.

La figure 2 montre une coupe prise dans un plan de coupe dont l'intersection avec le plan de la figure 1 est matérialisée par la ligne II-II.

Sur cette figure 2, on distingue la nervure intermédiaire 4 dans un plan de coupe passant par l'axe de rotation du pneu. Cette nervure est pourvue d'une pluralité d'incisions découpant la nervure en volumes élémentaires 40 compris entre deux incisions. On aperçoit les cavités de section constante et de profondeur légèrement inférieure à la profondeur des rainures 2. Bien entendu, ces cavités pourraient prendre toute forme et notamment des formes allant s'élargissant avec la profondeur ou encore être de section constante pour se terminer par un élargissement constituant un volume additionnel de stockage de liquide. On distingue également les limites de la partie centrale de forme cylindrique 100 à l'intérieur de laquelle sont formées les cavités.

Pour bénéficier au mieux de l'effet de captage de liquide sur la face de contact d'un volume élémentaire, il est judicieux que les cavités ne soient pas trop proches les unes des autres mais qu'elles soient réparties de façon homogène.

L'invention ayant été décrite de manière générale, il doit être compris que cette invention n'est pas limitée à cette seule variante. Il est clair que diverses modifications peuvent y être apportées sans sortir du cadre général de la présente invention.

Dans tous les cas présentés, la personne du métier est à même d'adapter la forme de chaque puits ou cavité formant un creux ne se fermant pas dans le contact. Préférentiellement chaque puits a une forme de section circulaire ou triangulaire ou rectangulaire. Quelle que soit la forme choisie, il est préférable de respecter une condition de rapport d'aspect entre la largeur de cavité dans le sens longitudinal et la longueur de cavité dans le sens transversal telles que ce rapport soit compris entre 2/3 et 3/2.

## Revendications

1. Bande de roulement (1) pour pneu destiné à équiper l'essieu moteur d'un véhicule poids lourd, cette bande de roulement comprenant une pluralité de rainures circonférentielles (2) ayant chacune une profondeur et une largeur, délimitant au moins trois nervures (4, 5, 6) ayant chacune une hauteur et une largeur mesurée dans la direction axiale, la bande de roulement (1) étant délimitée axialement par deux rangées de bord (7, 8), chaque nervure (4, 5, 6) étant pourvue d'une pluralité d'incisions (41, 51, 61) aptes à se fermer au moins en partie lors du passage dans le contact avec une chaussée, ces incisions (41, 51, 61) s'ouvrant sur chaque face latérale de la nervure pour former deux arêtes et ayant une profondeur au moins égale à 50% de la hauteur de la nervure, ces incisions (41, 51, 61) délimitant deux à deux un volume élémentaire (40, 50, 60) de nervure ainsi qu'une surface élémentaire de contact (400, 500, 600), cette bande de roulement étant **caractérisée en ce que** :
sur chaque volume élémentaire (40, 50, 60) délimité par deux incisions d'une même nervure, il est formé un volume de creux (42, 52, 62) s'ouvrant sur la face de contact à l'état neuf, ce volume de creux (42, 52, 62) ayant une aire totale sur la surface de roulement au moins égale à 0.4% et au plus égale à 1.5% de l'aire de la surface élémentaire de contact (400, 500, 600), ce volume de creux (42, 52, 62) ayant une profondeur au moins égale à la moitié de la profondeur des rainures et **en ce que** ce volume creux (42, 52, 62) est déterminé pour rester ouvert lors du passage dans le contact afin de permettre le captage de liquide éventuellement présent sur la chaussée, ce volume de creux étant localisé en partie centrale (100) du volume élémentaire, cette partie centrale correspondant à un cylindre radial formé dans le volume élémentaire et tangent aux incisions (41, 51, 61) délimitant ce volume élémentaire.

2. Bande de roulement (1) selon la revendication 1 **caractérisée en ce que** le volume de creux (42, 52, 62) entre deux incisions d'une nervure est formé par le volume d'au moins deux cavités, chaque cavité ayant une profondeur moyenne au moins égale à 0.75 fois la profondeur des rainures.

3. Bande de roulement (1) selon la revendication 2 **caractérisée en ce que** chaque cavité a une forme de section respectant une condition de rapport d'aspect 2/3 < l/L< 3/2, où « 1 » est la dimension maximale de la cavité dans la direction circonférentielle et « L » la dimension maximale de la cavité dans le sens transversal.

4. Bande de roulement (1) selon la revendication 2 ou la revendication 3 **caractérisée en ce que** les cavités sont disposées de manière à être à distance égale ou sensiblement égale de chacune des incisions délimitant un volume élémentaire (40, 50, 60) et distantes les unes des autres d'une distance égale ou proche de la largeur de la nervure divisée par le nombre de cavités additionné d'une unité.

5. Bande de roulement (1) selon l'une quelconque des revendications 1 à 4 **caractérisée en ce qu'**elle comprend une nervure centrale (5) et de part et d'autre au moins une nervure intermédiaire (4, 6), chaque nervure intermédiaire (4, 6) étant pourvue d'incisions (41, 61) faisant un angle moyen différent de zéro avec la direction axiale, les angles des incisions des nervures intermédiaires (51) étant tels que la bande de roulement présente une orientation en V des volumes élémentaires (40, 50, 60).

6. Bande de roulement (1) selon la revendication 5 **caractérisée en ce que** les incisions (51) formées sur la nervure centrale (5) ont une forme en flèche pour suivre l'inclinaison des incisions formées sur les nervures situées de part et d'autre de la nervure centrale.

7. Bande de roulement (1) selon l'une des revendications 1 à 6 **caractérisée en ce que** chaque rangée de bord (7, 8) est pourvue d'une pluralité de blocs (70, 80) espacés circonférentiellement les uns des autres par des rainures (3) d'orientation transversale ou sensiblement transversale.

8. Bande de roulement (1) selon la revendication 7 **caractérisée en ce que** les blocs (70, 80) des rangées de bord (7, 8) sont reliés au moins en partie par une série de protubérances de gomme (9) formés dans les rainures (3).

9. Bande de roulement (1) selon l'une quelconque des revendications 1 à 8 **caractérisée en ce que** le pas des incisions (41, 51, 61) formées sur les nervures (4, 5, 6) est constant ou sensiblement constant et choisi pour être au moins égal à 18 mm et au plus égal à 52 mm, ce choix étant déterminé en fonction de la profondeur des rainures (2) délimitant la nervure considérée.

10. Bande de roulement (1) selon l'une quelconque des revendications 1 à 9 **caractérisée en ce que** la distance minimale entre deux incisions délimitant un volume élémentaire est inférieure à la largeur axiale dudit volume élémentaire.

11. Pneu pour équiper l'essieu moteur d'un véhicule poids lourd, ce pneu comprenant une bande de roulement (1) selon l'une quelconque des revendications 1 à 10.

## Patentansprüche

1. Reifenlauffläche (1) für einen Reifen, welcher dafür vorgesehen ist, die Antriebsachse eines Schwerlastfahrzeugs auszurüsten, wobei diese Reifenlauffläche eine Vielzahl von umfänglichen Rillen (2) mit jeweils einer Tiefe und einer Breite aufweist, welche mindestens drei Rippen (4, 5, 6) mit jeweils einer Höhe und einer in axialer Richtung gemessenen Breite abgrenzen, wobei die Reifenlauffläche (1) axial von zwei Randreihen (7, 8) begrenzt wird, wobei jede Rippe (4, 5, 6) mit einer Vielzahl von Einschnitten (41, 51, 61) versehen ist, welche geeignet sind, sich mindestens teilweise zu schließen, wenn sie mit der Fahrbahn in Kontakt kommen, wobei diese Einschnitte (41, 51, 61) an jeder Seitenfläche der Rippe münden, um zwei Kanten zu bilden, und eine Tiefe besitzen, welche mindestens gleich 50% der Höhe der Rippe ist, wobei diese Einschnitte (41, 51, 61) paarweise ein elementares Rippen-Volumen (40, 50, 60) sowie eine elementare Kontaktfläche (400, 500, 600) abgrenzen, wobei diese Reifenlauffläche **dadurch gekennzeichnet ist, dass**:
in jedem von zwei Einschnitten einer gleichen Rippe abgegrenzten elementaren Volumen (40, 50, 60) ein Hohlraum-Volumen (42, 52, 62) ausgebildet ist, welches in neuem Zustand an der Kontaktfläche mündet, wobei dieses Hohlraum-Volumen (42, 52, 62) einen Gesamtflächeninhalt auf der Reifenlauffläche von mindestens gleich 0,4% und von höchstens gleich 1,5% des Flächeninhalts der elementaren Kontaktfläche (400, 500, 600) besitzt, wobei dieses Hohlraum-Volumen (42, 52, 62) eine Tiefe von mindestens gleich der Hälfte der Tiefe der Rillen besitzt, und dass dieses Hohlraum-Volumen (42, 52, 62) dafür bestimmt ist, beim in Kontakt kommen offen zu bleiben, um das Erfassen von eventuell auf der Fahrbahn vorhandener Flüssigkeit zu ermöglichen, wobei dieses Hohlraum-Volumen im mittleren Abschnitt (100) des elementaren Volumens angeordnet ist, wobei dieser mittlerer Abschnitt einem radialen Zylinder entspricht, welcher in dem elementaren Volumen ausgebildet ist, und die Einschnitte (41, 51, 61), welche dieses elementare Volumen abgrenzen, berührt.

2. Reifenlauffläche (1) nach Anspruch 1, **dadurch gekennzeichnet, dass** das Hohlraum-Volumen (42, 52, 62) zwischen zwei Einschnitten einer Rippe von dem Volumen von mindestens zwei Hohlräumen gebildet wird, wobei jeder Hohlraum eine mittlere Tiefe von mindestens gleich dem 0,75-fachen der Tiefe der Rillen besitzt.

3. Reifenlauffläche (1) nach Anspruch 2, **dadurch gekennzeichnet, dass** jeder Hohlraum eine Querschnittsform besitzt, welche eine Bedingung des Längenverhältnisses 2/3 < l/L < 3/2 erfüllt, wo "l" die maximale Abmessung des Hohlraums in Umfangsrichtung und "L" die maximale Abmessung des Hohlraums in Querrichtung ist.

4. Reifenlauffläche (1) nach Anspruch 2 oder Anspruch 3, **dadurch gekennzeichnet, dass** die Hohlräume derartig angeordnet sind, dass sie den gleichen oder im Wesentlichen gleichen Abstand zu jedem der Einschnitte haben, welche ein elementares Volumen (40, 50, 60) abgrenzen und voneinander durch einen Abstand beabstandet sind, welcher gleich oder annähernd gleich der Breite der Rippe ist, welche von der Anzahl von Hohlräumen, die einer Einheit beigefügt ist, unterteilt ist.

5. Reifenlauffläche (1) nach einem der Ansprüche 1 bis 4, **dadurch gekennzeichnet, dass** sie eine mittlere Rippe (5) und beiderseits mindestens eine Zwischenrippe (4, 6) aufweist, wobei jede Zwischenrippe (4, 6) mit Einschnitten (41, 61) versehen ist, welche mit der axialen Richtung einen mittleren Winkel einschließen, welcher von Null verschieden ist, wobei die Winkel der Einschnitte der Zwischenrippen (51) derartig sind, dass die Reifenlauffläche eine V-Ausrichtung der elementaren Volumen (40, 50, 60) aufweist.

6. Reifenlauffläche (1) nach Anspruch 5, **dadurch gekennzeichnet, dass** die Einschnitte (51), welche auf der mittleren Rippe (5) ausgebildet sind, eine pfeilartige Form besitzen, um der Neigung der Einschnitte, welche auf den Rippen angeordnet sind, die beiderseits der mittleren Rippe ausgebildet sind, zu folgen.

7. Reifenlauffläche (1) nach einem der Ansprüche 1 bis 6, **dadurch gekennzeichnet, dass** jede Randreihe (7, 8) mit einer Vielzahl von Blöcken (70, 80) versehen ist, welche in Umfangsrichtung voneinander durch Rillen (3) mit quer verlaufender oder im Wesentlichen quer verlaufender Ausrichtung beabstandet sind.

8. Reifenlauffläche (1) nach Anspruch 7, **dadurch gekennzeichnet, dass** die Blöcke (70, 80) der Randreihen (7, 8) mindestens zum Teil durch eine Reihe von Gummiausstülpungen (9), welche in den Rillen (3) ausgebildet sind, verbunden sind.

9. Reifenlauffläche (1) nach einem der Ansprüche 1 bis 8, **dadurch gekennzeichnet, dass** die Teilung der auf den Rippen (4, 5, 6) ausgebildeten Einschnitte (41, 51, 61) konstant oder im Wesentlichen konstant und gewählt ist, um mindestens gleich 18 mm und höchstens gleich 52 mm zu sein, wobei diese Wahl in Abhängigkeit von der Tiefe der Rillen (2) getroffen wird, welche die betreffende Rippe abgrenzen.

10. Reifenlauffläche (1) nach einem der Ansprüche 1 bis 9, **dadurch gekennzeichnet, dass** der minimale Abstand zwischen zwei Einschnitten, welche ein elementares Volumen abgrenzen, kleiner als die axiale Breite des elementaren Volumens ist.

11. Reifen, um die Antriebsachse eines Schwerlastfahrzeugs auszurüsten, wobei dieser Reifen eine Reifenlauffläche (1) nach einem der Ansprüche 1 bis 10 aufweist.

## Claims

1. Tread (1) for a tyre intended to be fitted to the driven axle of a heavy goods vehicle, this tread comprising a plurality of circumferential grooves (2) each having a depth and a width, delimiting at least three ribs (4, 5, 6) each having a height and a width measured in the axial direction, the tread (1) being axially delimited by two edge rows (7, 8), each rib (4, 5, 6) being provided with a plurality of sipes (41, 51, 61) able to close at least in part as they enter the contact patch in which the tyre is in contact with a road surface, these sipes (41, 51, 61) opening onto each lateral face of the rib to form two edge corners and having a depth at least equal to 50% of the height of the rib, these sipes (41, 51, 61) in pairs delimiting an elementary rib volume (40, 50, 60) and an elementary contact surface (400, 500, 600), this tread being **characterized in that**:
on each elementary volume (40, 50, 60) delimited by two sipes of one and the same rib there is formed a void volume (42, 52, 62) opening on the contact face in the new state, this void volume (42, 52, 62) having a total area on the tread surface at least equal to 0.4% and at most equal to 1.5% of the area of the elementary contact surface (400, 500, 600), this void volume (42, 52, 62) having a depth at least equal to half the depth of the grooves, and **in that** this void volume (42, 52, 62) is determined such that it remains open as it passes through the contact patch so as to allow any liquid present on the road surface to be picked up, this void volume being located in the central part (100) of the elementary volume, this central part corresponding to a radial cylinder formed in the elementary volume and tangential to the sipes (41, 51, 61) delimiting this elementary volume.

2. Tread (1) according to Claim 1, **characterized in that** the void volume (42, 52, 62) between two sipes of a rib is formed by the volume of at least two cavities, each cavity having a mean depth at least equal to 0.75 times the depth of the grooves.

3. Tread (1) according to Claim 2, **characterized in that** each cavity has a cross-sectional shape that meets an aspect-ratio condition 2/3 < l/L < 3/2, where "l" is the maximum dimension of the cavity in the circumferential direction and "L" is the maximum dimension of the cavity in the transverse direction.

4. Tread (1) according to Claim 2 or Claim 3, **characterized in that** the cavities are arranged in such a way as to be equal or substantially equal distances from each of the sipes delimiting an elementary volume (40, 50, 60) and distant from one another by a distance equal or close to the width of the rib divided by one more than the number of cavities.

5. Tread (1) according to any one of Claims 1 to 4, **characterized in that** it comprises a central rib (5) and, on each side, at least one intermediate rib (4, 6), each intermediate rib (4, 6) being provided with sipes (41, 61) making a mean angle other than zero with the axial direction, the angles of the sipes of the intermediate ribs (51) being such that the elementary volumes (40, 50, 60) make a V-shape on the tread.

6. Tread (1) according to Claim 5, **characterized in that** the sipes (51) formed on the central rib (5) have an arrowhead shape to follow the inclination of the sipes formed on the ribs situated on each side of the central rib.

7. Tread (1) according to one of Claims 1 to 6, **characterized in that** each edge row (7, 8) is provided with a plurality of blocks (70, 80) spaced circumferentially apart by transversely or substantially transversely oriented grooves (3).

8. Tread (1) according to Claim 7, **characterized in that** the blocks (70, 80) of the edge rows (7, 8) are connected at least in part by a series of protrusions of rubber (9) formed in the grooves (3).

9. Tread (1) according to any one of Claims 1 to 8, **characterized in that** the spacing of the sipes (41, 51, 61) formed on the ribs (4, 5, 6) is constant or substantially constant and chosen to be at least equal to 18 mm and at most equal to 52 mm, this choice being determined according to the depth of the grooves (2) that delimit the rib in question.

10. Tread (1) according to any one of Claims 1 to 9, **characterized in that** the minimum distance between two sipes delimiting an elementary volume is less than the axial width of the said elementary volume.

11. Tyre to be fitted to the driven axle of a heavy goods vehicle, this tyre comprising a tread (1) according to any one of Claims 1 to 10.
